# EUROPEAN PATENT SPECIFICATION

(11) **EP 1 809 029 B1**
(45) Date of publication and mention of the grant of the patent: **06.11.2013**
(21) Application number: 06019810.8
(22) Date of filing: 21.09.2006
(51) Int. Cl.: H04N 5/445

(54) **Parallel television based video searching**
Parallele fernsehbasierte Videosuche
Recherche vidéo télévisuel parallele

(30) Priority: 12.01.2006 US 758579 P; 18.05.2006 US 419152
(43) Date of publication of application: 18.07.2007
(73) Proprietor: Broadcom Corporation, Irvine, CA 92617 (US)
(72) Inventor: Bennett, James D., 11000 Prague (CZ); Karaoguz, Jeyhan, Irvine, CA 92606 (US)
(74) Representative: Jehle, Volker Armin

(56) References cited:
- EP-A- 0 848 554
- EP-A- 1 289 296
- EP-A- 1 427 186
- WO-A-02/32140
- WO-A-02/39745
- WO-A1-98/26584
- US-A1- 2004 017 512
- US-A1- 2005 101 951
- US-B1- 6 184 877

## Description

### BACKGROUND OF THE INVENTION

### 1. Field of the Invention

Various aspects of present invention relate to controlling selection, searching and/or delivery of media to a television through interaction with the television and media source.

### 2. Description of the Related Art

A typical remote control (or "Remote" as used herein) has multiple predefined buttons. A Remote is used to change TV ("Television") channels, change audio and video settings of the TV and control power supply to the TV by selecting one or more of the buttons. A Remote interacts with a TV in one direction. A remote generally sends control signal to a TV using infrared or RF transmission. The control signal triggers the TV to implement the changes.

Television channel broadcasters provide hundreds of television channels to viewers. A TV receives channels either directly or indirectly via a set top box from a broadcaster. Many types of media sources are used to provide supplemental or alternate video to the TV. Many of these media sources directly source locally accessed media, and others alternatively or in addition provide television broadcast tuners for managing television channel selection and video and audio settings. Exemplary media sources include cable and satellite set top boxes and DVD (Digital Video Disk) players. Each of these media sources is controlled through direct interaction or via a Remote. To interact with a user via a Remote, media systems deliver information via a TV's screen and/or a speaker and receive information directly from the Remote.

If the media source is a TV broadcaster, then typically a viewer is supplied with a list of channels, the viewer selects a channel and requests the same using the Remote. If the media source is a DVD Player, then also the viewer is typically provided with a media catalogue and the viewer makes a selection using the media catalogue. The viewer has no choice to view a video or listen to an audio that is not available with the media source.

A user can search for a video or audio or both or can search for media belonging to a category in local or remote Internet media servers by running at least a browser program in a local processor such as the are described by the international patent application WO 98/26584. The local processor is typically a personal computer. The user may use the Remote to input selections to the local processor. The Remote has, as already mentioned, multiple predefined buttons. The user gets visual information from a screen attached to the local processor, makes a choice and presses the buttons to realize the choice. Such interaction usually requires a user to look back and forth at the Remote and the screen attached to the local processor in attempts to locate buttons and understand the Remote's operation. The screen attached to a personal computer is typically bulky and cannot be moved easily.

Further limitations and disadvantages of conventional and traditional approaches will become apparent to one of ordinary skill in the art through comparison of such systems with various aspects of the present invention.

### BRIEF SUMMARY OF THE INVENTION

A control device for interacting with a television system and/or media source, substantially as shown in and/or described in connection with at least one of the figures, as set forth more completely in the claims.

These and other advantages, aspects and novel features of the present invention, as well as details of illustrative aspects thereof, will be more fully understood from the following description and drawings.

### BRIEF DESCRIPTION OF THE DRAWINGS

For various aspects of the present invention to be easily understood and readily practiced, various embodiments will now be described, for purposes of illustration and not limitation, in conjunction with the following figures:

FIG. 1 is a schematic block diagram illustrating interaction between a control device that remotely controls selection of a video and searching and display of the selected video on an entertainment system, the entertainment system and media sources in accordance with various aspects of the present invention;

FIG. 2 is a schematic block diagram illustrating an embodiment of the control device of FIG. 1, where the entertainment system comprises a television and a set top box;

FIG. 3 is a schematic block diagram illustrating an embodiment of the control device of FIG. 2, where a video is adapted for a screen of the television by a processing circuitry;

FIG. 4 is a schematic block diagram illustrating an embodiment of the control device of FIG. 1, where the entertainment system comprises a television, and the control device interacts with the media source via Internet;

FIG. 5 is a schematic block diagram illustrating an embodiment of the control device of FIG. 4, where the control device interacts with the television via a set top box;

FIG. 6 is a schematic block diagram illustrating an embodiment of the control device of FIG. 5, further supporting storage of a video.

FIG. 7 is a schematic block diagram illustrating communication pathways between a multimedia source, an entertainment system, a billing server, processing circuitry and a control device that controls searching of a selected multimedia element for playback on the entertainment system;

FIG. 8 is a flowchart illustrating a method of controlling selection and delivery of processed media to a television screen and to a screen of a control device for display by the control device, according to one embodiment of the present invention;

FIG. 9 is a flowchart illustrating a method of controlling browsing and retrieval of media and delivery of the media to a television or a control device as per user selection by the control device, according to one embodiment of the present invention; and

FIG. 10 illustrates an embodiment of the control device of FIG. 7 wherein the control device comprises a screen that is touch sensitive, the screen displaying a user interface corresponding to a media browsing program run by the control device.

### DETAILED DESCRIPTION

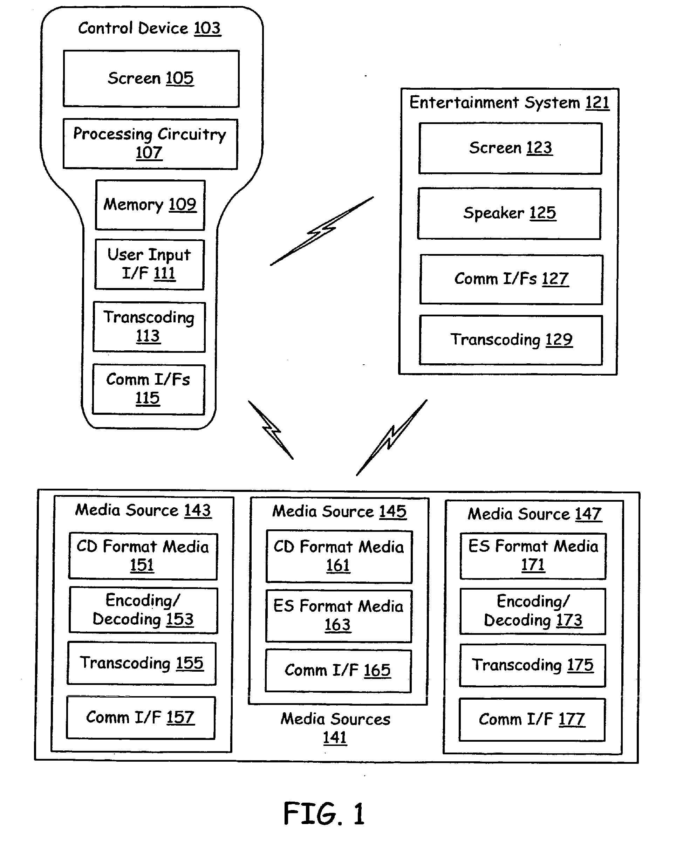

FIG. 1 is a schematic block diagram illustrating interaction between a control device 103 that remotely controls selection of a video and searching and display of the selected video on an entertainment system 121, the entertainment system 121 and media sources 141. The control device 103 has a control device screen 105 *(e.g.,* a video display), processing circuitry 107 *(e.g.,* which may comprise various hardware and/or software modules), a memory 109, a user input interface 111 and communication interfaces 115. The entertainment system 121 has a screen 123 and communication interfaces 127. The media sources 141 comprise a first media source 143, a second media source 145 and a third media source 147.

The control device 103 is communicatively coupled (or connected) to the entertainment system 121 over a first wireless link and to the media sources 141 over a second wireless link. The communication interfaces 115 comprise a first communication interface via which the control device 103 interacts with the entertainment system 121 and a second communication interface via which the control device 103 interacts with the media sources 141. The first wireless link and the second wireless link may comprise characteristics of any of a variety of communication link types (e.g., infrared, Bluetooth, IEEE 802.11, IEEE 802.15, cellular telephony (e.g., GSM/GPRS/EDGE, CDMA, CDMA2000, UMTS, WCDMA, etc.), UltraWideBand, standard/proprietary, etc.). The control device 103 in another embodiment may be communicatively coupled to the entertainment system 121 and the media sources 141 via a wired link. The wired link may, for example, comprise characteristics of one or more of a copper wire, an Ethernet cable and an optical fiber.

The user input interface 111 of the control device 103 receives a selection from a user *(e.g.,* a user input identifying a video selection). The selection identifies a first video stream for the entertainment system 121 and a second video stream for the control device 103. The processing circuitry 107 runs a media search program and searches for the first video stream and the second video stream in the first media source 143, in the second media source 145 and/or in the third media source 147 using the media search program. The media search program may be, for example, a software program that searches for video information (e.g., the first video stream or the second video stream) in any or all media repositories (e.g., the media sources 141) to which the control device 103 is communicatively coupled (directly or indirectly). The processing circuitry 107 triggers delivery of the first video stream from the media sources 141 to the entertainment system 121 if the first video stream is located by the processing circuitry 107 in any one of the media sources 141 (the media source 143 or the second media source 145 or the third media source 147). Subsequently, the entertainment system 121 receives the first video stream via the communication interfaces 127 and displays the first video stream on the screen 123. The processing circuitry 107 retrieves via the communication interfaces 115 the second video stream if the second video stream is located in any one of the media sources 141. The control device 103 displays the retrieved second video stream on the control device screen 105. If one or more of the first video stream and the second video stream are not located in any of the media sources 141, then the control device 103 displays an indicator on the control device screen 105. In another embodiment, the control device displays the indicator on the entertainment system screen 123.

The selection by the user may, for example, identify two (or any number of) media elements, where each media element has an audio portion and a video portion. A first media element may be for the entertainment system 121, and a second media element may be for the control device 103. The entertainment system 121 displays a video portion of the first media element on the entertainment system screen 123 and plays an audio portion of the first media element on a speaker 125 of the entertainment system 121. A media element may generally comprise characteristics of any of a variety of selectable units of media information (e.g., multimedia information). For example and without limitation, a media element may comprise characteristics of a movie, a music video, a television program, a television channel, a sporting or other entertainment event, a news report, a computer game or any of a variety of units of recorded or live multimedia information.

The first media element may be processed for (e.g., specifically adapted for) the entertainment system screen 123, and the second media element may be processed for (e.g., specifically adapted for) the control device screen 103. Such processing may, for example and without limitation, comprise transcoding, encoding and decoding, and/or various fitting functionalities. Any or all of such functionalities can be employed or disabled in the control device 103, in the entertainment system 121 and in the media sources 141. The control device 103 employs transcoding in block 113, the entertainment system 121 employs transcoding in block 129, the first media source 143 employs transcoding in block 155 and encoding/decoding in block 153 and the third media source 147 employs transcoding in block 175.

The first media source 143 of the media sources 141 supports media in a control device format 151. Transcoding may, for example, be performed on a media to save bandwidth. The second media source 145 of the media sources 141 supports media in entertainment system format 163 *(i.e.,* a format that is prescribed for the entertainment system screen 123, for example, HDTV (High Definition Television) format) and media in control device format 161 (e.g., QVGA (Quarter Video Graphics Array) format). The first and second media sources 143, 147 employ encoding/decoding functionality in blocks 153 and 173 respectively. The encoding/decoding functionality may, for example, be advantageous, when the media source handles differently encoded media.

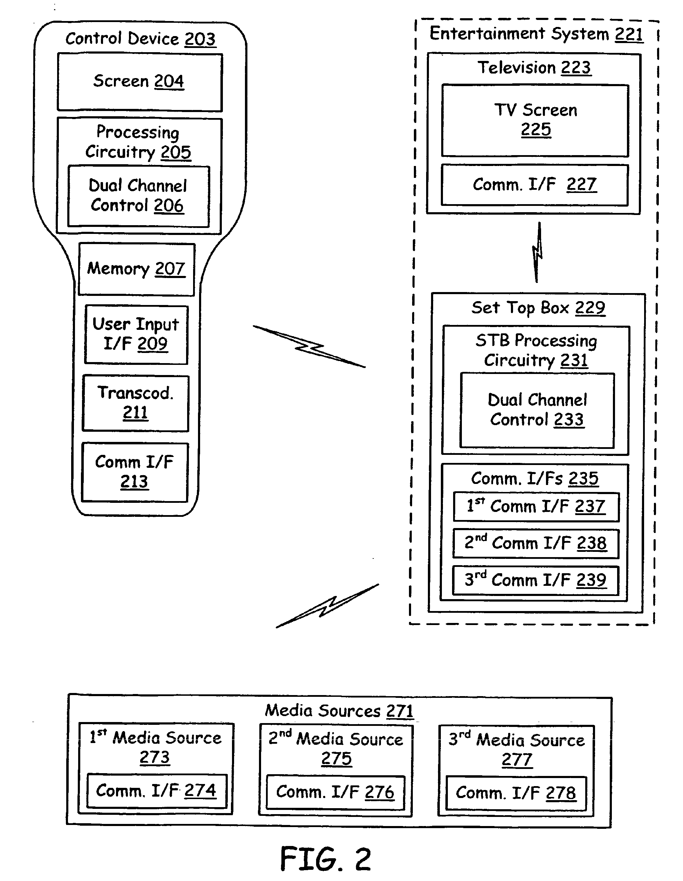

FIG. 2 is a schematic block diagram illustrating an embodiment of the control device 103 of FIG. 1 where the entertainment system 221 comprises a television 223 and a set top box 229. The control device 203 communicates with the television 223 and media sources 271 via the set top box 229. The control device 203 interacts with the set top box 229 using communication interface 213 of the control device 203. The set top box 229 is communicatively coupled to the control device 203, the television 223 and the media sources 271 via a first communication interface 237, a second communication interface 238 and a third communication interface 239, respectively. The communication link between the control device 203 and the set top box 229 may, for example, comprise characteristics of one or more of infrared, Bluetooth, IEEE 802.11, IEEE 802.15, cellular telephony (e.g., GSM/GPRS/EDGE, CDMA, CDMA2000, UMTS, WCDMA, etc.), UltraWideBand and any standard/proprietary connection. The communication link between the set top box 229 and the television 223 is shown to be a wireless link. This communication link may alternatively, for example, be a tethered fiber optic or a coaxial cable.

The media sources 271 and the entertainment system 221 may be located at the same premises. In another embodiment, the media sources 271 may be located at a first premises, and the entertainment system 221 may be located at a second premises. The entertainment system 221 and the media sources 271 may, for example, interact with each other using one or more of infrared, Bluetooth, IEEE 802.11, IEEE 802.15, cellular telephony (e.g., GSM/GPRS/EDGE, CDMA, CDMA2000, UMTS, WCDMA, etc.), Ultra WideBand, satellite and landline telephony techniques.

Processing circuitry 205 of the control device 203 runs a media search program. An interface corresponding to the media search program is displayed on a control device screen 204. The interface corresponding to the media search program may be, for example and without limitation, a layout of tabs, buttons, icons and highlighted text. A user interacts with the control device 203 visually and via a user input interface 209. The interface helps the user to enter a selection via the user input interface 209. The user input interface 209 may, for example, be a plurality of buttons. Alternately, the control device 204 may be a touch screen. In this case the user uses the screen 204 to input the selection. The selection from the user may, for example, identify a media guide perusal request. The control device 203 searches for a media guide in the media sources 271 using the media search program. The media sources 271 comprise a first media source 273, a second media source 275 and a third media source 277. The control device 203 searches for a media guide in the first media source 273, the second media source 275 and the third media source 277. For example and without limitation, the first media source 273 may be a television broadcaster, the second media source 275 may be a DVD system and the third media source 277 may be a video camera. In this non-limiting example the television broadcaster 273 may comprise a first media guide that identifies a plurality of program titles currently being broadcast by the television broadcaster 273. The DVD system 275 might not comprise any media guide. The video camera 277 may comprise a second media guide that identifies a plurality of video titles.

The processing circuitry 205 of the control device 203 discovers the first media guide and the second media guide in the first media source 273 and in the third media source 277, respectively, using the media search program. The processing circuitry 205 generates a control signal and sends the control signal via a communication interface 213 of the control device 203. The control signal triggers the set top box 229 to receive the first media guide and the second media guide from the television broadcaster (the first media source 273) and the video camera (the third media source 277), respectively, via the third communication interface 239. The control signal also directs the set top box 229 to forward the received media guides (the first media guide and the second media guide) to the control device 203 via the first communication interface 237. The control device 203 receives the media guides via the communication interface 213 and subsequently displays the media guides (the first media guide and the second media guide) on the control device screen 204. The user who interacts visually with the control device screen 204 identifies a plurality of programs currently being broadcast by the television broadcaster 273 from the plurality of program titles (the first media guide). The user also identifies a plurality of videos available in the video camera 277 from the plurality of video titles (the second media guide).

The user input interface 209 of the control device 203 may subsequently receive a media selection. The media selection may, for example, identify a first television program from the plurality of television programs currently being broadcast by the television broadcaster 273 for the control device screen 204. In such a case, the processing circuitry 205 of the control device 203 generates a second control signal and the control device 203 sends the second control signal via the communication interface 213. In response to the second control signal, the set top box 229 receives the first television program from the television broadcaster 273 and forwards the first television program to the control device 203. The control device 203 subsequently displays a video portion of the first television program on the control device screen 204.

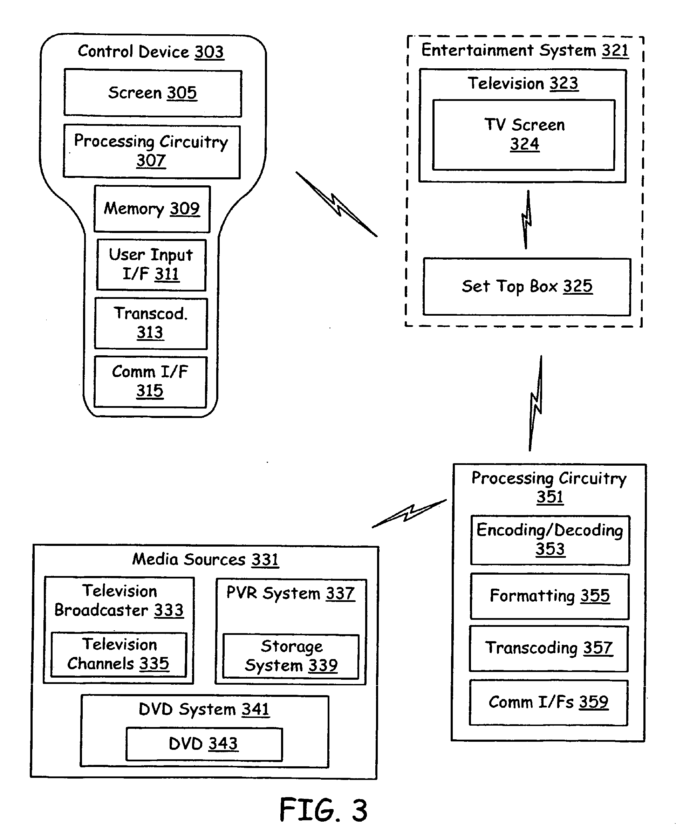

FIG. 3 is a schematic block diagram illustrating an embodiment of the control device 203 of FIG. 2 where a video is adapted for a screen 324 of the television 323 by processing circuitry 351. The user input interface 311 of the control device 303 receives a playback selection from a user. The playback selection, for example and without limitation, identifies a video for the television 323 and the control device 303. The control device 303 searches for the video in the media sources 331. Hence, the control device 303 searches for the video in television broadcaster 333, in PVR (Personal Video Recording) system 337 and in DVD system 341. The control device 303 communicates with any one of the media sources 331 via the set top box 325. The control device 303 searches for the selected video using a media search program. For example, the control device 303 does not find the selected video in video repositories of the television broadcaster 333, the PVR (Personal Video Recording) system 337 and the DVD system 341. The control device 303 displays an indicator on the control device screen 305 indicating unavailability of the selected video in the television broadcaster 333, the PVR (Personal Video Recording) system 337 and the DVD system 341.

In another exemplary case, the control device 303 locates the selected video in the storage system 339 of the PVR system 337. The selected video may be any video format, for example, HDTV (High Definition Television), VGA (Video Graphics Array), SVGA (Super Video Graphics Array), QVGA (Quarter Video Graphics Array), etc. Typically, the television screen 324 may support video in HDTV format, while the control device screen 305 may support QVGA format. In another exemplary case, the selected video is in VGA format. The control device 303 also determines that the selected video is in VGA format, a format neither supported by the television screen 324 nor the control device screen 305. Accordingly, the control device 303 sends a control signal to the set top box 325 via the communication interface 315. The set top box 325, in response to the control signal, directs the selected video from the storage system 339 of the PVR system 337 to the processing circuitry 351. The processing circuitry 351 employs encoding/decoding functionality in block 353, formatting functionality in block 355 and transcoding functionality in block 357. The processing circuitry 351 applies transcoding to the selected video and converts the selected video to HDTV format. The set top box 325 receives the video in HDTV format from the processing circuitry 351 and forwards the video in HDTV format to the television 323. The television 323 subsequently displays the video in HDTV format on the television screen 324. The processing circuitry 351 also applies transcoding to a second copy of the selected video and converts the selected video to QVGA format. The set top box 325 receives the video in QVGA format from the processing circuitry 351 and forwards the video in QVGA format to the control device 303. Subsequently the control device 303 displays the video in QVGA format on the control device screen 305.

In yet another embodiment the second copy of the selected video is not processed by the processing circuitry 351. The set top box 325 receives the second copy of the selected video from the storage system 339 of the PVR system 337 and forwards the second copy of the selected video (video in VGA format) to the control device 303. The control device 303 receives the selected video in VGA format from the set top box 325 via the communication interface 315 and forwards the received video to control device transcoding unit 313. The control device transcoding unit 313 applies transcoding to the received video to convert the video to QVGA format. Next, the control device 303 displays the video in QVGA format on the control device screen 305. The storage system 339 of the PVR system 337 may be, without limitation, a portable storage, a non-portable storage, a rewritable storage, a read only storage or a worm storage.

The control device 303 comprises a memory 309. The control device 303 may store an identity of the video identified by the playback selection and the location of the video in the memory 309, if the video is found in at least any of the media sources 331. In the another exemplary case, the control device 303 locates the selected video in the storage system 339 of the PVR system 337. In such case, the control device 303 stores an identifier for the selected video and an address of the PVR system 337 in the memory 309 for subsequent reference. The control device 303 might not search for the video using the media search program in a scenario where the control device 303 receives a second playback selection identifying the same video. In such a scenario, the control device 303 may determine that the video identified by the second playback selection resides in the storage system 339 of the PVR system 337 using the address of the PVR system 337 that is stored in the memory 309. Next, the control device 303 may trigger the set top box 325 to retrieve the video from the PVR system 337.

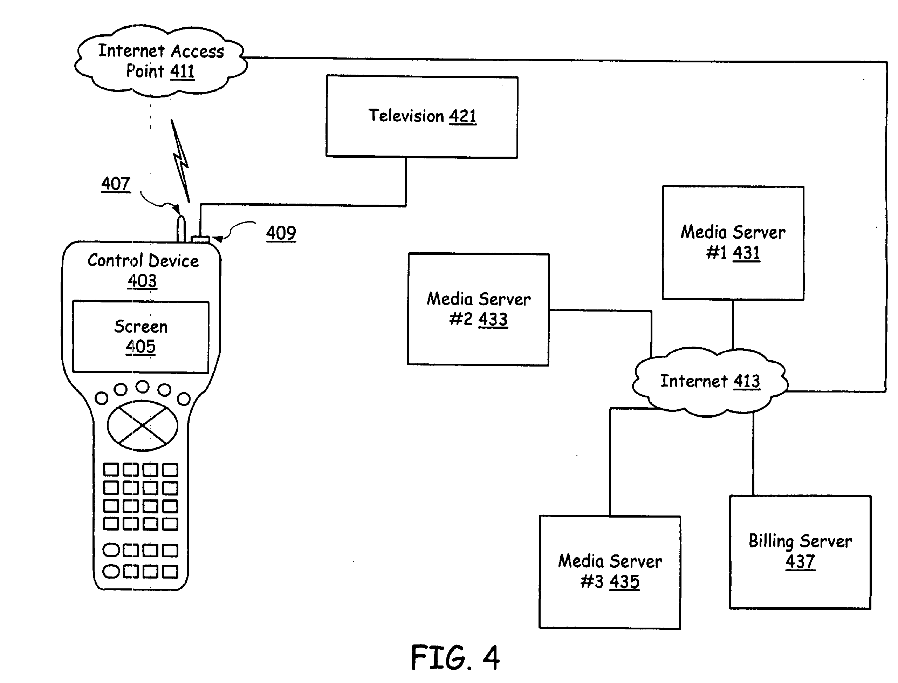

FIG. 4 is a schematic block diagram illustrating an embodiment of the control device 103 of FIG. 1, where the entertainment system comprises a television 421, and the control device 403 interacts with the media source via Internet 413. The control device 403, for example, comprises an IP (Internet Protocol) address. The control device 403 is adapted to communicate to any device having a second IP address. The control device 403 is communicatively coupled to an Internet access point 411 via a wireless link. The communication link between the control device 403 and the Internet access point 411 may alternately be a wired link. The wireless link may, for example, be one or more of a Bluetooth link, an IEEE 802.11 link, and an IEEE 802.15 link. The wired link may be an optical fiber link, a coaxial cable link and an Ethernet link. The control device 403 interacts with the Internet 413 via the Internet access point 411. A first media server 431, a second media server 433 and a third media server 435 are communicatively coupled to the Internet 413. Each of the first media server 431, the second media server 433 and the third media server 435 has a separate IP address. The control device 403 interacts with the first media server 431, the second media server 433 and the third media server 435 via the Internet 413.

The first media server 431, the second media server 433 and the third media server 435 comprise a first plurality of media elements, a second plurality of media elements and a third plurality of media elements, respectively. The first plurality of media elements, the second plurality of media elements and the third plurality of media elements may be, for example, any combination of stored movies, personal videos, television programs, music videos, video portions of television programs and video games. For example and without limitation, the first media server 431 may be an online music store. The first plurality of media elements refer to a plurality of music audios and music videos available with the online music store 431. In this non-limiting example, the second media server 433 may be a television channel service provider premises. The second plurality of media elements may then refer to a plurality of television programs currently being broadcast by the television channel service provider premises 433. The third media server 435 may be a movie server. The third plurality of media elements may then refer to a plurality of movies stored in the movie server 435.

The control device 403 comprises a wireless communication interface 407 via which the control device 403 interacts with the Internet access point 411. The control device 403 comprises a wired communication interface 409 via which the control device is tethered to the television 421. The control device 403 comprises a plurality of buttons via which a user enters selection. The control device 403 may receive a playback selection, a media swapping selection, a storage selection and a variety of types of other selections. For example the control device 403 receives the playback selection from the user. The playback selection may identify a first media element for the television 421 and a second media element for the control device 403. The control device 403 comprises a media search tool. The media search tool may, for example, be a software program installed in processing circuitry of the control device 403. The control device 403 comprises a rechargeable battery that supplies power to the processing circuitry, the wireless communication interface 407 and the wired communication interface 409.

In this non-limiting example, the control device 403 searches for the first media element and the second media element in the online music store 431, in the television channel service provider premises 433 and in the movie server 435 using the media search tool. The control device 403 may find any one or both or none of the first media element and the second media element in the online music store 431, in the television channel service provider premises 433 and in the movie server 435. For example, the first media element is a music video available with the online music store 431, and the second media element is a movie available in the movie server 435. Consequently, the control device 403 finds the music video (the first media element) and the movie (the second media element) in the online music store 431 and in the movie server 435, respectively, using the media search tool. The control device 403 requests the online music store 431 for access to the music video (the first media element) via the Internet 413. The control device 403 also sends a request to the movie server 435 for the movie (the second media element) via the Internet 413.

One or both of the music video and the movie may not be free-to-view media elements. For example, the music video is a pay video. The control device 403 goes through credential verification steps and, if necessary, media rights purchasing steps before the control device 403 is granted access to the music video by the online music store 431. A billing server 437 is communicatively coupled to the Internet 413. The billing server 437 has a second IP address, and the billing server 437 interacts with the control device 403 and any of the media servers 431, 433 and 435 via the Internet 413 using the second IP address. The credential verification steps and the media rights purchasing steps may include user interaction, where the user may be guided to enter a plurality of choices via the plurality of buttons of the control device 403. During the credential verification steps and the media rights purchasing steps, the control device 403, the online music store 431 and the billing server 437 interact with each other via the Internet. On successful completion of the steps, the control device 403 is granted access to the music video by the online music store 431. The control device 403 subsequently receives the music video from the online music store 431 via the Internet 413 and the wireless communication interface 407. The control device 403 forwards the music video to the television 421 via the wired communication interface 409. The television 421 displays a video portion of the music video on a television screen and plays an audio portion of the music speaker on a television speaker.

In the non-limiting example, the movie (the second media element) identified by the playback selection is a free-to-view movie. The control device 403 receives the movie from the movie server 435 via the Internet 413 and the wireless communication interface 407. The control device 403 displays a video portion of the received movie on the control device screen 405. If the control device 403 comprises a speaker, then the control device 403 plays an audio portion of the received movie on the speaker.

In a second embodiment, the control device 403 supports standard Internet browsing tools, for example, Google, Yahoo etc. In the second embodiment, the control device screen 405 displays a program interface corresponding to the Internet browsing tool (e.g., Google or Yahoo) running in the control device 403. The program interface displayed on the control device screen 405 guides the user to browse all media elements available in the media servers 431, 433 and 435 that are communicatively coupled to the Internet 413 and to make selections.

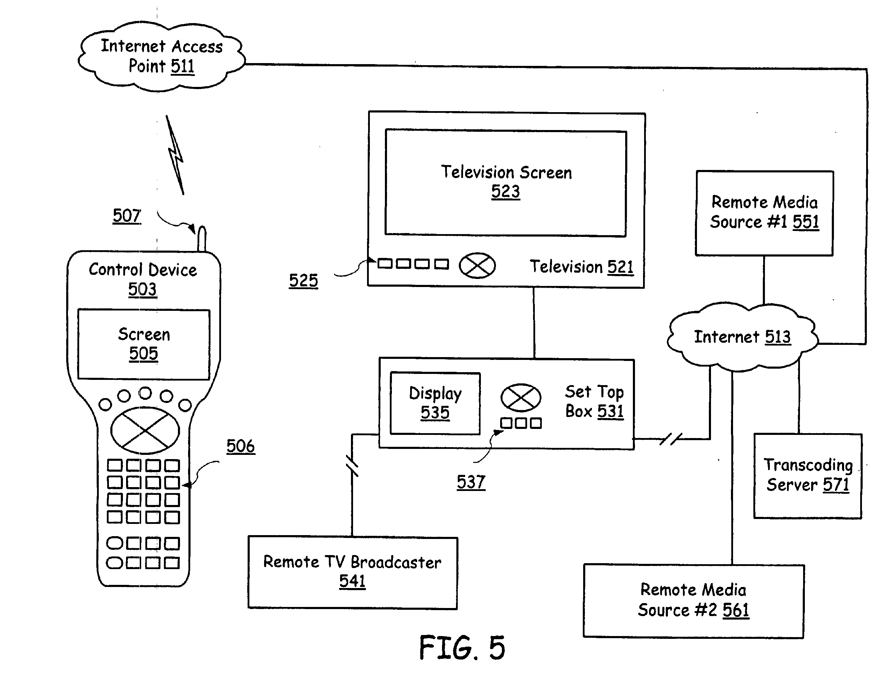

FIG. 5 is a schematic block diagram illustrating an embodiment of the control device 403 of FIG. 4 where the control device 503 interacts with the television 521 via a set top box 531. The television 521 comprises a plurality of buttons 525 via which a user may control settings and display on the television screen 523. The television 521 is communicatively coupled to the set top box 531. The set top box 531 comprises a second plurality of buttons 537 and a display 535. The user may use the second plurality of buttons 537 and the display 535 to modify the settings and display on the television screen 523. The control device 503 comprises a third plurality of buttons 506 with which the user may control the settings and display on the television screen 523. The control device 503 controls delivery of media (e.g., multimedia information and/or video information) from a first remote media source 551, a second remote media source 561 and a remote television broadcaster 541 to the television 521 via the set top box 531. The control device 503 is communicatively coupled to the set top box 531 via the Internet 513. The set top box 531 is again communicatively coupled to the first remote media source 551, the second remote media source 561 and the remote television broadcaster 541 via the Internet 513.

The remote television broadcaster 541 is shown in the figure to be communicatively coupled to the set top box 531 via a wired link. In one embodiment, communication coupling between the set top box 531 and the remote television broadcaster 541 may be a wireless link, that may be, for example and without limitation, a satellite link, any of a variety of cellular links or a Bluetooth link. The set top box 531 is located at a first premises, and the remote television broadcaster 541 is located at a second premises. Media broadcast by the remote television broadcaster 541 is a plurality of television programs. The first remote media source 551 and the second remote media source 561 may be one or more or a movie repository, a music store, a DVD, a CD, a video camera, etc. The first remote media source 551 is located at a third premises, and the second remote media source 561 is located at a fourth premises. The control device 503 may be located at any one of the first premises, the second premises, the third premises and the fourth premises. The control device 503 may alternately be located at a fifth premises.

The control device 503 comprises a control device screen 505 on which the control device 503 displays a first media element. The control device 503 is identified by a first IP address. The set top box 531 is identified by a second IP address. Each of media servers (541 or 551 or 561) interacting with the Internet 513 has a separate IP address. The first media element, for example, may be sourced by the first remote media source 551 in QVGA format. The control device screen 503 may support media in QVGA format only. The control device 503 receives the first media element in QVGA format from the first remote media source 551 via the Internet 513 and the communication interface 507 and subsequently displays a video portion of the first media element on the control device screen 505.

The television screen 523 displays a second media element. The remote television broadcaster 541, for example, may source the second media element in HDTV format. The television screen 523 might support media in HDTV format only. The television 521 receives the second media element in HDTV format from the remote television broadcaster 541 via the set top box 531 and subsequently displays a video portion of the second media element on the television screen 523.

The third plurality of buttons 506 serve as a user input interface of the control device 503. A user enters a variety of requests using the third plurality of buttons 506. For example, the control device 503 receives a media-swapping request via the user input interface 506. The media-swapping request calls for the first media element to be displayed on the television screen 523, and the second media element to be displayed on the control device screen 505. The first media element is in QVGA format, a format not supported by the television screen 523. The second media element is in HDTV format, a format not supported by the control device screen 505. A transcoding server 571 is communicatively coupled to the Internet 513. The transcoding server 571 responds to a request by applying transcoding to a media element sent to it and converts the media element to a format prescribed in the request.

The control device 503 sends a control signal to the set top box 531 via the Internet 513. In response to the control signal, the set top box 531 directs delivery of the first media element in QVGA format from the first remote media source 551 to the transcoding server 571 via the Internet 513. The transcoding server 571 converts the first media element from the QVGA format to HDTV format. The set top box 531 subsequently receives the first media element in HDTV format from the transcoding server 571 and directs the first media element to the television 521. The television 521 displays the first media element (or video portion of the first media element), which is now in HDTV format, on the television screen 523.

In response to the control signal from the control device 503, the set top box 531 in addition receives the second media element from the remote television broadcaster 541 in HDTV format and sends the second media element to the transcoding server 571 via the Internet 513. The transcoding server 571 converts the second media element from the HDTV format to QVGA format. The control device 503 subsequently receives the second media element in QVGA format from the transcoding server 571 via the Internet 513 and the communication interface 507. The control device 503 displays a video portion of the second media element, which is now in QVGA format, on the control device screen 505.

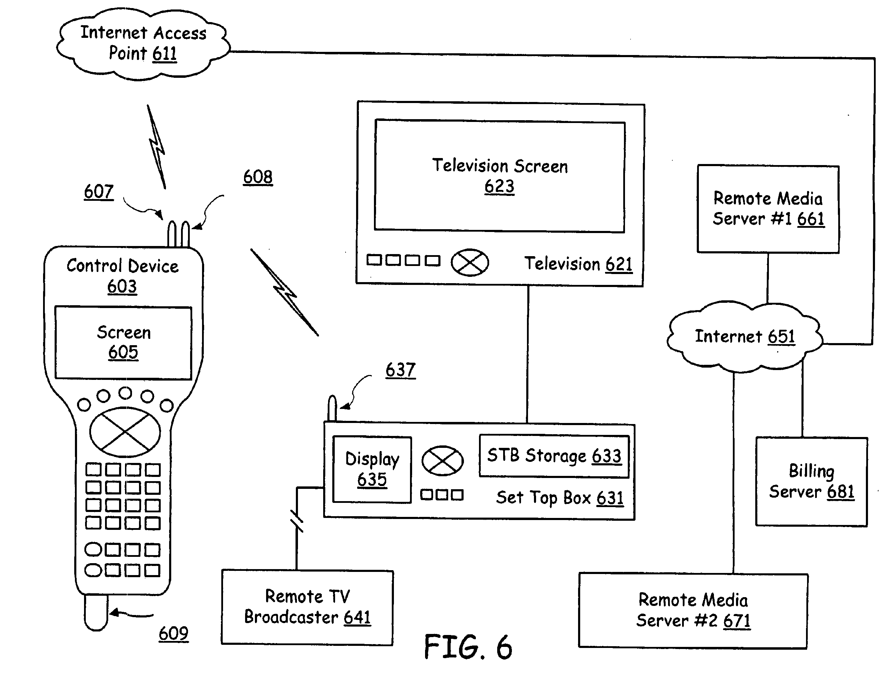

FIG. 6 is a schematic block diagram illustrating an embodiment of the control device 503 of FIG. 5 further supporting storage of a video. The control device 603 has a first wireless interface 607 and a second wireless interface 608. The control device 603 communicates to a set top box 631 via the second wireless interface 608. The set top box 631 comprises a third wireless interface 637 via which the set top box 631 interacts with the control device 603. The set top box 631 is communicatively coupled to a television 621 that is located at a remote location using a wired link. The set top box 631 is also communicatively coupled to a television broadcaster 641. The set top box 631 may be a satellite set top box or a cable set top box depending on type of the television broadcaster 641. The control device 603 controls delivery of television channels from the television broadcaster 641 to the television 621 via the set top box 631.

The control device 603 is communicatively coupled to the Internet 651 via the Internet access point 611 and using the first wireless interface 607. The control device 603 is communicatively coupled to a first remote media server 661, a second remote media server 671 and a billing server 681 via the Internet 651. The first remote media server 661 comprises a first plurality of media elements, and the second remote media server 671 comprises a second plurality of media elements. The control device 603 may retrieve the first plurality of media elements and the second plurality of media elements via the Internet 651. The set top box 631 comprises set top box storage 633. A removable storage unit 609 is attached to the control device 603.

For example, the control device 603 receives a media selection from a user through a user input interface of the control device 603. The media selection identifies a media element for a television screen 623 of the television 621. The control device 603 runs an Internet search tool. The Internet search tool may be any standard search tool such as Google, Yahoo, etc., or a proprietary tool. The control device screen 605 displays a layout corresponding to the Internet search tool running in the control device 603 to facilitate Internet browsing for the user. Alternately, the television screen 623 may display the layout corresponding to the Internet search tool running in the control device 603. The control device 603 searches for the media element corresponding to the media selection in media sources coupled to the Internet 651 using the Internet search tool. For this example, the control device 603 locates the media element in the second remote media server 671. The control device 603 requests the second remote media server 671 for the media element. If the media element is not free-to-use then the control device 603 acquires media rights for the media element. The billing server 681 interacts with the control device 603 and the second remote media server 671 via the Internet 651 and generates a bill for the user. The user may be given an option of paying the bill via the Internet 651. Acquiring media rights for the media element may comprise user interaction where, for example, the user may be guided via displays on the control device screen 605. The user may also use the user input interface of the control device 603 during the media rights acquisition.

The control device 603, after acquiring media rights for the media element, receives the media element from the second remote media server 671 via the Internet 651 and the first wireless interface 607. The media element is for the television screen 623. The control device 603 checks whether the television screen 623 supports the format of the received media element. For example, the television screen 623 might support media elements only in HDTV format. If the control device 603 determines that the received media element is not in HDTV format, then the transcoding unit of the control device 603 converts the received media element to HDTV format. The control device 603 sends the media element in HDTV format to the set top box 631 via the second wireless interface 608. The set top box 631 receives the media element in HDTV format via the third wireless interface 637. The set top box 631 next forwards the media element to the television 621 for display on the television screen 623.

In one embodiment, the set top box 631 comprises a second transcoding unit. The control device 603 forwards the received media element to the set top box 631 without applying transcoding to the received media element. The set top box 631 receives the media element, and the second transcoding unit of the set top box 631 converts the media element to HDTV format and sends the media element in HDTV format to the television 621 for display on the television screen 623. The media element, without limitation, may comprise characteristics of a movie, a music video, a personal video, a photo, a video game or any live or recorded video and/or multimedia information.

In yet another embodiment, a third transcoding unit may be communicatively coupled to the Internet 651. The control device 603 ascertains whether the television screen 623 supports the format of the media element found in the second remote media server 671. If the control device 603 determines that the media element is not in HDTV format, then the control device 603 triggers delivery of the media element from the second remote media server 671 to the third transcoding unit after acquiring media rights for the media element. The third transcoding unit converts the media element to HDTV format. The control device 603 receives the media element in HDTV format from the third transcoding unit via the Internet 651 and the first wireless interface 607. The control device 603 forwards the media element in HDTV format to the set top box for display on the television screen 623.

The control device 603 may subsequently receive a storage request through the user input interface of the control device 603. The storage request identifies the set top box storage 633. The set top box 631 receives the media element that is searched for and located by the control device 603 in the second remote media server 671 from the control device 603. The set top box 631 stores the media element in the set top box storage 633, in addition to sending the received media element to the television 621 for display.

For example, the set top box storage 633 may be a removable storage unit. The removable set top box storage 633 may, for example, be taken out of the set top box 631 and plugged into the control device 603. In such an exemplary scenario, the removable storage unit 609 refers to the set top box storage 633 with the media element stored in it. The control device 603 may subsequently receive a replay selection. The replay selection may identify the media element identified in the previous media selection for the control device 603. The Internet search tool running in the control device 603 first looks for the media element in the removable storage unit 609. In this example, the control device 603 finds the media element in the removable storage unit 609. The control device 603 retrieves the media element from the removable storage unit 609 and displays a video portion of the media element on the control device screen 603. The media element may be adapted for the control device screen 603 prior to display by the transcoding unit of the control device 603.

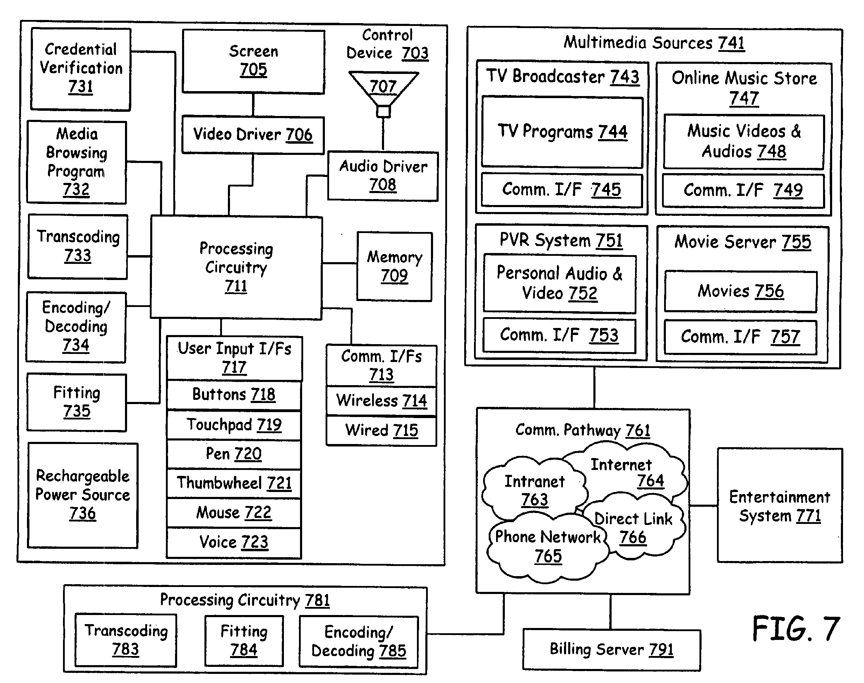

FIG. 7 is a schematic block diagram illustrating communication pathways between a multimedia source 741, an entertainment system 771, a billing server 791, processing circuitry 781 and a control device 703 that controls searching of a selected multimedia element for playback on the entertainment system 771. A plurality of multimedia elements are available with the multimedia source 741. The multimedia source 741 may be one or a combination of a television broadcaster 743, an online music store 747, a PVR system 751 and a movie server 755. In this example, the plurality of multimedia elements may be television programs 744, music videos and audios 748, personal audio and video recordings 752 and movies 756. Each type of the multimedia source 741 has a communication interface via which the multimedia source 741 is communicatively coupled to the communication pathway 761. The communication pathway 761 may comprise characteristics of a direct link 766, Internet 764, Intranet 763, phone network 765, etc.

The entertainment system 771 is typically, for example, a television, a television and a set top box, a home theatre system, a PVR system or a video game box. The control device 703 comprises a screen 705, a speaker 707, processing circuitry 711, a transcoding unit 733, an encoding/decoding unit 734, a fitting unit 735, a memory 709, a user input interface 717, a communication interface 713, a credential verification unit 731 and a rechargeable battery 736. The user input interface 717 of the control device 703 may, for example, be any or all of a plurality of buttons 718, a touchpad 719, a pen 720, a thumbwheel 721, a mouse 722 and a voice-based interface 723. A user, to control video and audio settings of the entertainment system 771, uses the control device 703. The user may also select which of the plurality of multimedia elements from the multimedia source 741 to be displayed on a screen of the entertainment system 771 by entering a choice via the user input interface 717 of the control device 703. A plurality of functionalities, for example and without limitation, swapping of channels, channel scanning and PIP (i.e., picture-in-picture) functionalities may be performed for the entertainment system 771 using the user input interface 717 of the control device 703.

The control device 703 may further control selection of a multimedia element, subsequent search for the multimedia element in the multimedia source 741 and display of the multimedia element on the control device screen 705 and/or on the screen of the entertainment system 771 upon locating the multimedia element. The control device 703 may display an indicator on the control device screen 705 and/or on the screen of the entertainment system 771 if the selected multimedia element is not available with the multimedia source 741. The user may enter a variety of selections and/or instructions via the user input interface 717 of the control device 703. The control device 703 generates a variety of control signals in accordance with the variety of selections directing the entertainment system 771 to perform as per the user instructions. The entertainment system 771 is located at a first premises, and the control device 703 may be located at a second premises. The control device 703 may thus remotely control the entertainment system 771.

After locating the multimedia element in the multimedia source 741, the control device 703 may acquire media rights for the multimedia element through interaction with a billing server 791.

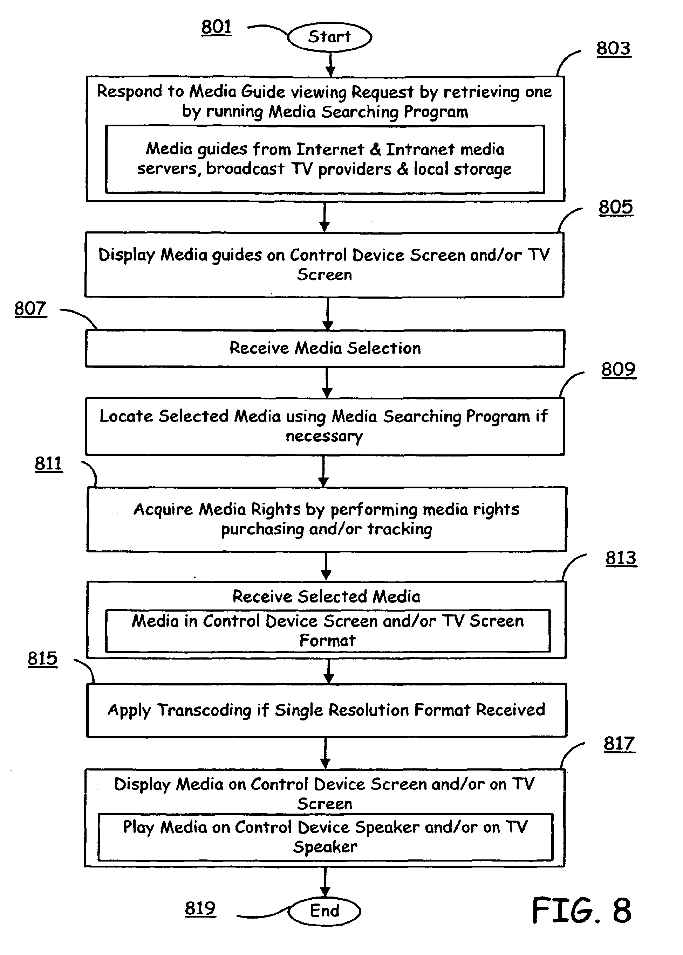

FIG. 8 is a flowchart illustrating a method of controlling selection and delivery of processed media to a television screen and to a screen of a control device for display by the control device. The method may begin at a start block (or step) 801. In a next block 803, the control device responds to a media guide-viewing request from a user. The user may enter the media guide-viewing request through an input interface of the control device. In such case, the control device receives the media guide-viewing request via the input interface of the control device at the block 803 and responds to the request by searching for a media guide from media sources to which the control device is communicatively coupled. The control device retrieves one or more media guides from the media sources to which the control device is communicatively coupled. The control device displays the retrieved media guides on the screen of the control device at block 805. A media source may, for example, comprise one of an Internet media server, an Intranet media server, a broadcast television provider and a local media storage such as a hard drive, a DVD, a CD and a tape. The media guide identifies a plurality of media elements available with the media source. The media guide helps the user to make a media selection of one or more than one media element from the plurality of media elements. A media element may, for example, comprise a movie, a television channel, an audio-visual game, a photo, a live snippet, a video, a video portion of a television channel, and a video game. The control device may display the retrieved media guides on the television screen.

In a next block 807, the control device receives a media selection from the user. The media selection may be based on the media guides displayed on the control device screen and/or on the television screen. The media selection may identify a media element for either the control device screen or for the television screen or for both. The media selection may alternately identify two media elements, one for the control device screen and another for the television screen. For example and without limitation, the media selection identifies a media element to be displayed on the control device screen. The control device identifies a media source from the media sources, to which the control device is communicatively coupled, in which the selected media element is available since the media selection is based on the media guides. If the media selection is not based on the media guides, then the control device searches for the selected media element in the media sources to which the control device is communicatively coupled. The control device locates the media source in which the selected media element is available as shown in block 809. The control device sends a request to the media source seeking delivery of the selected media element from the media source.

The selected media element may be a free-to-use media element. If the selected media element is not free, then the control device purchases the selected media element in the next block 811. Purchasing may, for example, include one of, or a combination of, key based and plastic card based purchasing. Purchasing may include one or more user interactive steps, where the user is guided through displays on the screen of the control device followed by the control device receiving entries from the user via the input interface of the control device. If the selected media element is free-to-use, then the control device might not purchase the selected media element. Even then, the control device may perform credential verification functionalities at block 811.

The control device receives the selected media element from the media source in a next block 813. The selected media element may be received in a format that may or may not be supported by the screen of the control device. If the selected media element is received in a format that is not supported by the screen of the control device, then transcoding is applied to the received media element by the control device as shown in a next block 815, and transcoded media is generated. The control device might not be able to perform the transcoding, for example, because of limited processing capability, limited power or limited memory. In that case the control device may direct a transcoding server to perform the transcoding functionality at block 813. The control device may send the received media element to the transcoding server or may direct the selected media element from the media source to the transcoding server and then receive the transcoded media from the transcoding server. If the transcoding server performs the transcoding functionality then the control device does not apply the transcoding to the received media element in block 815. The media source that supplies the selected media element may alternatively apply transcoding to the selected media element prior to delivering the media element to the control device. The control device displays the transcoded media on the screen of the control device in next and final block 817.

The media selection may in addition identify a second media element to be displayed on the television screen. The control device searches and finds out in which of the media sources the second media element is present and accordingly triggers delivery of the second media element to the television screen. The television displays the received second media element on the television screen.

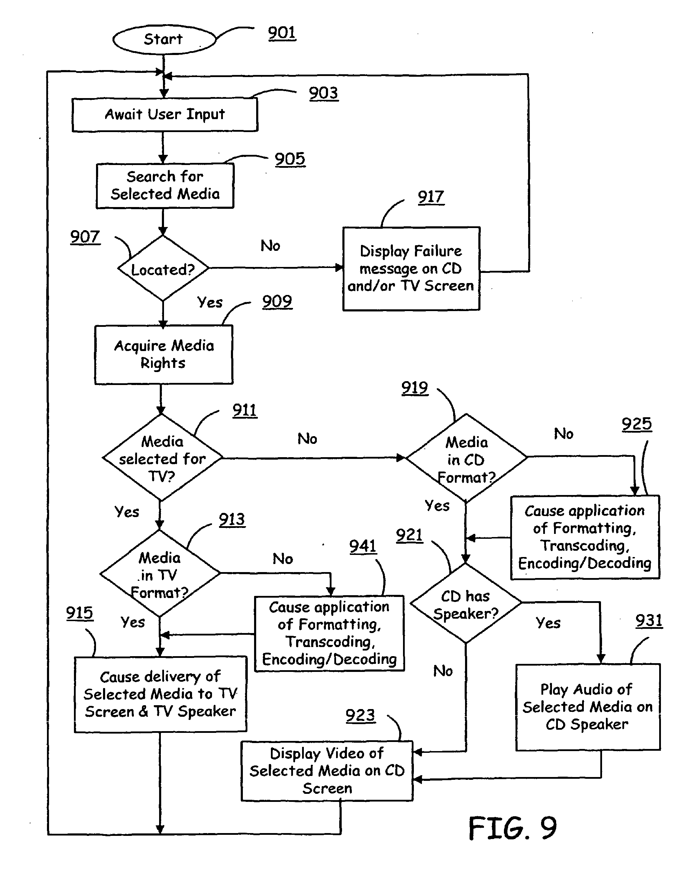

**FIG. 9** is a flowchart illustrating a method of controlling browsing and retrieval of media and delivery of the media to a television or a control device as per user selection by the control device. The method may begin at block 901. The control device waits for a user input as shown at block 903. The control device receives the user input from the user in block 903. The user input may identify a media selection comprising a first media element for the television and/or a second media element for the control device. The user input may alternately be a media-swapping request. In next block 905, the control device searches for the first media element and the second media element in a plurality of media sources to which the control device is communicatively coupled. If the control device does not find any of the first media element and the second media element in the plurality of media sources then the control device displays a failure message on a screen of the television and/or on a screen of the control device as shown in block 917. Operation flow of the control device then returns to block 903.

If the control device locates at least any of the first media element and the second media element in block 907, then the control device acquires media rights for the located media elements in block 909. If the located media elements are free-to-use then operation of the control device may skip block 909 and flow to block 911. In block 911 the control device determines if the first media element selected for the television is present among the located media elements. If the first media element for the television is selected, then the control device determines in block 913 if the first media element is in a format that is supported by the television screen. If the first media element is in the format that is supported by the television screen then the control device triggers delivery of the first media element to the television at a next block 915. If the first media element is not in television format, then the control device causes application of transcoding to the first media element to convert the first media element to the television format as shown in block 941. The control device may do so passing the first media element through a transcoding server or a first transcoding unit of the control device or a second transcoding server of a media source that supplies the first media element. Next the operation flow of control device goes to the block 903.

If the control device determines in block 911 that the first media element is not selected, then the located media elements is the second media element for the control device. The control device in block 919 determines whether the second media element is in a format that is supported by the control device screen. If the second media element is in the control device screen format, then operation of the control device flows to block 921. If the second media element is not in control device screen format, then the control device causes application of transcoding to the second media element to convert the second media element to the control device format, as shown in block 925. In block 921, the control device determines if the control device has a speaker. If the control device comprises the speaker, then the control device plays an audio portion of the second media element on the speaker as shown in block 931. The control device displays a video portion of the second media element on the control device screen in block 923 irrespective of the control device having the speaker or not. Operation of the control device the returns to block 903 and awaits a second user input.

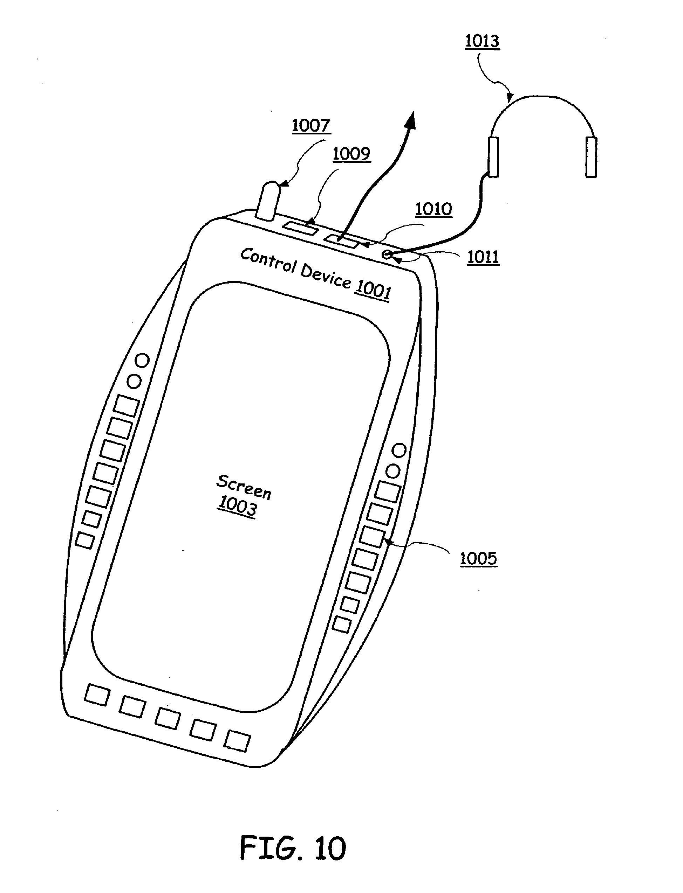

FIG. 10 illustrates an embodiment of the control device 703 of FIG. 7 wherein the control device 1001 comprises a screen 1003 that is touch sensitive, the screen 1003 displaying a user interface corresponding to a media browsing program run by the control device 1001. The control device 1001 comprises a plurality of buttons 1005. The plurality of buttons 1005 and the touch sensitive screen 1003 are the user interface of the control device 1001.

The user interface corresponding to the media browsing program run by the control device 1001 may be, for example, a layout of a plurality of icons, a plurality of menus and a plurality of boxes. The control device 1001 displays the layout on the screen 1003. The layout facilitates browsing a plurality of media sources to which the control device 1001 is communicatively coupled and/or searching for a media element in the plurality of media sources. Media browsing and media searching may include one or more user interactive steps, where the user is guided through displays on the screen 1003 followed by the control device receiving entries from the user via the touch sensitive screen 1003 and/or the plurality of buttons 1005.

In a second embodiment, the control device 1001 comprises an Internet protocol (IP) address and consequently, using the IP address, the control device communicatively connects to a plurality of media servers and video repositories coupled to Internet. The control device 1001 supports standard Internet browsing tools, for example, Google, Yahoo, etc. In the second embodiment, the touch sensitive control device screen 1003 displays a program interface corresponding to the Internet browsing tool (e.g., Google or Yahoo) running in the control device 1001. The program interface displayed on the control device screen 1003 guides the user to browse and search for media elements.

The control device 1001 is communicatively coupled to the plurality of media sources via a wireless communication interface 1007 and/or a wired communication interface 1010. The control device 1001 may be communicatively coupled to the plurality of media sources directly or indirectly. The control device 1001 comprises an interface 1009 into which a storage device may be plugged. The user may choose to store a media element displayed on the control device screen 1003 in the storage device. The user enters the choice using the user interface of the control device 1001. The control device 1001 comprises an audio port 1011. An audio portion of a multimedia element or an audio element received by the control device 1001 may be heard in a speaker 1013 if the speaker 1013 is inserted into the audio port 1011.

As one of average skill in the art will appreciate, the term "communicatively coupled," as may be used herein, includes wireless and wired, direct coupling and indirect coupling via another component, element, circuit, or module. As one of average skill in the art will also appreciate, inferred coupling (i.e., where one element is coupled to another element by inference) includes wireless and wired, direct and indirect coupling between two elements in the same manner as "communicatively coupled."

Various aspects of the present invention have also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

Various aspects of the present invention have additionally been described above with the aid of functional building blocks illustrating the performance of certain significant functions and relationships. The boundaries of these functional building blocks and relationships between various functional building blocks have been arbitrarily defined for convenience of description. Alternate boundaries or relationships could be defined as long as the certain significant functions are appropriately performed. Such alternate boundaries or relationships are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

In summary, various aspects of the present invention provide a control device for interacting with a television system and/or media source. While the invention has been described with reference to certain aspects and embodiments, it will be understood by those skilled in the art that various changes may be made and equivalents may be substituted without departing from the scope of the claims. In addition, many modifications may be made to adapt a particular situation or material to the teachings of the invention without departing from said scope. Therefore, it is intended that the invention not be limited to the particular embodiment disclosed, but that the invention will include all embodiments falling within the scope of the appended claims.

## Claims

1. A control device (103, 203, 303, 403, 503, 603, 703, 1001) for use in connection with a television (223, 323, 421, 521, 621), the television having a first screen (225, 324, 523, 623), the control device comprising:
a second screen (105, 204, 305, 405, 505, 605, 705, 1003);
a user input interface (111, 209, 311, 717, 1005) adapted to present a video browsing interface to a user on the second screen and receive a video selection;
a communication interface (115, 213, 315, 713); and
at least one module (107, 205, 307, 711) adapted to:
search for a first video element and a second video element in a plurality of media sources (141, 271, 331, 431, 433, 435, 541, 551, 561, 641, 661, 671, 741), the first video element and the second video element corresponding to the video selection; and
direct display of the first video element on the first screen and display of the second video element on the second screen if the at least one module locates the first video element and the second video element, wherein
the communication interface is adapted to support communications between the control device and the plurality of media sources.

2. The control device of claim 1, further comprising a memory, and wherein the at least one module is further adapted to store locations of the first video element and the second video element.

3. The control device of claim 1, wherein the at least one module is further adapted to set up communication links between the control device and the plurality of media sources using the communication interface prior to the search for the first video element and the second video element.

4. The control device of claim 1, wherein the at least one module is further adapted to display an indicator on the first screen or the second screen if the at least one module does not locate at least one of the first and the second video elements.

5. The control device of claim 1, wherein the at least one module is further adapted to receive a media-swapping request for directing display of the first video element on the second screen and display of the second video element on the first screen.

6. The control device of claim 1, wherein the at least one module is further adapted to acquire media rights for the video elements.

7. The control device of claim 1, wherein the at least one module is further adapted to send a control signal for directing delivery of the first video element for display on the first screen and directing delivery of the second video element for display on the second screen if the at least one module locates the first video element and the second video element.

## Patentansprüche

1. Steuereinrichtung (103, 203, 303, 403, 503, 603, 703, 1001) zur Verwendung in Verbindung mit einem Fernsehgerät (223, 323, 421, 521, 621), wobei das Fernsehgerät einen ersten Bildschirm (225, 324, 523, 623) aufweist, und wobei die Steuereinrichtung umfasst:
- einen zweiten Bildschirm (105, 204, 305, 405, 505, 605, 705, 1003),
- eine Benutzereingabeschnittstelle (111, 209, 311, 717, 1005), die dafür ausgelegt ist, auf dem zweiten Bildschirm einem Benutzer eine Video-Browsing-Schnittstelle zu präsentieren und eine Video-Auswahl zu empfangen,
- eine Kommunikationsschnittstelle (115, 213, 315, 713), und
- mindestens ein Modul (107, 205, 307, 711), das dafür ausgelegt ist:
- in einer Mehrzahl Medienquellen (141, 271, 331, 431, 433, 435, 541, 551, 561, 641, 661, 671, 741) nach einem ersten Video-Element und einem zweiten Video-Element zu suchen, wobei das erste Video-Element und das zweite Video-Element der Video-Auswahl entsprechen, und
- die Anzeige des ersten Video-Elements auf den ersten Bildschirm und die Anzeige des zweiten Video-Elements auf den zweiten Bildschirm zu lenken, wenn das mindestens eine Modul das erste Video-Element und das zweite Video-Element findet, wobei
- die Kommunikationsschnittstelle dafür ausgelegt ist, Kommunikationen zwischen der Steuereinrichtung und der Mehrzahl Medienquellen zu unterstützen.

2. Steuereinrichtung nach Anspruch 1, die ferner einen Speicher umfasst, und wobei das mindestens eine Modul ferner dafür ausgelegt ist, die Platzierungen des ersten Video-Elements und des zweiten Video-Elements zu speichern.

3. Steuereinrichtung nach Anspruch 1, wobei das mindestens eine Modul ferner dafür ausgelegt ist, die Kommunikationsverbindungen zwischen der Steuereinrichtung und der Mehrzahl Medienquellen unter Verwendung der Kommunikationsschnittstelle vor der Suche nach dem ersten Video-Element und dem zweiten Video-Element einzurichten.

4. Steuereinrichtung nach Anspruch 1, wobei das mindestens eine Modul ferner dafür ausgelegt ist, auf dem ersten Bildschirm oder dem zweiten Bildschirm einen Indikator anzuzeigen, wenn das mindestens eine Modul das erste und/oder das zweite Video-Element nicht findet.

5. Steuereinrichtung nach Anspruch 1, wobei das mindestens eine Modul ferner dafür ausgelegt ist, eine Medienwechselanfrage zu empfangen, um die Anzeige des ersten Video-Elements auf den zweiten Bildschirm und die Anzeige des zweiten Video-Elements auf den ersten Bildschirm zu lenken.

6. Steuereinrichtung nach Anspruch 1, wobei das mindestens eine Modul ferner dafür ausgelegt ist, für die Video-Elemente Medienrechte zu erwerben.

7. Steuereinrichtung nach Anspruch 1, wobei das mindestens eine Modul ferner dafür ausgelegt ist, ein Steuersignal zum Lenken der Abgabe des ersten Video-Elements zur Anzeige auf dem ersten Bildschirm und Lenken der Abgabe des zweiten Video-Elements zur Anzeige auf dem zweiten Bildschirm zu senden, wenn das mindestens eine Modul das erste Video-Element und das zweite Video-Element findet.

## Revendications

1. Dispositif de commande (103, 203, 303, 403, 503, 603, 703, 1001) destiné à une utilisation en connexion avec une télévision (223, 323, 421, 521, 621), la télévision ayant un premier écran (225, 324, 523, 623), le dispositif de commande comprenant :
un deuxième écran (105, 204, 305, 405, 505, 605, 705, 1003) ;
une interface d'entrée d'utilisateur (111, 209, 311, 717, 1005) adaptée à présenter une interface de navigation vidéo à un utilisateur sur le deuxième écran et à recevoir une sélection vidéo ;
une interface de communication (115, 213, 315, 713) ; et
au moins un module (107, 205, 307, 711) adapté à :
rechercher un premier élément vidéo et un deuxième élément vidéo dans une pluralité de sources de média (141, 271, 331, 431, 433, 435, 541, 551, 561, 641, 661, 671, 741), le premier élément vidéo et le deuxième élément vidéo correspondant à la sélection vidéo ; et
diriger l'affichage du premier élément vidéo sur le premier écran et l'affichage du deuxième élément vidéo sur le deuxième écran si l'au moins un module localise le premier élément vidéo et le deuxième élément vidéo, dans lequel
l'interface de communication est adaptée à supporter des communications entre le dispositif de commande et la pluralité de source de média.

2. Dispositif de commande selon la revendication 1, comprenant en outre une mémoire, et dans lequel l'au moins un module est en outre adapté à stocker des emplacements du premier élément vidéo et du deuxième élément vidéo.

3. Dispositif de commande selon la revendication 1, dans lequel l'au moins un module est en outre adapté à établir des liaisons de communication entre le dispositif de commande et la pluralité de sources de média en utilisant l'interface de communication avant la recherche du premier élément vidéo et du deuxième élément vidéo.

4. Dispositif de commande selon la revendication 1, dans lequel l'au moins un module est en outre adapté à afficher un indicateur sur le premier écran ou le deuxième écran si l'au moins un module ne localise pas au moins un parmi les premier et deuxième éléments vidéo.

5. Dispositif de commande selon la revendication 1, dans lequel l'au moins un module est en outre adapté à recevoir une demande de changement de média pour diriger l'affichage du premier élément vidéo sur le deuxième écran et l'affichage du deuxième élément vidéo sur le premier écran.

6. Dispositif de commande selon la revendication 1, dans lequel l'au moins un module est en outre adapté à acquérir des droits sur les média pour les éléments vidéo.

7. Dispositif de commande selon la revendication 1, dans lequel l'au moins un module est en outre adapté à envoyer un signal de commande pour diriger la fourniture du premier élément vidéo pour affichage sur le premier écran et diriger la fourniture du deuxième élément vidéo pour affichage sur le deuxième écran si l'au moins un module localise le premier élément vidéo et le deuxième élément vidéo.
